## Europäisches Patentamt

## European Patent Office

## Office européen des brevets

(19)

(11) Publication number: **0 198 297 B1**

(12) **EUROPEAN PATENT SPECIFICATION**

(45) Date of publication of the patent specification:
16.08.90

(51) Int. Cl.⁵: **B62M 7/12**

(21) Application number: **86104277.8**

(22) Date of filing: **27.03.86**

(54) Device for direct driving of wheels.

(30) Priority: **01.04.85 CN 85101503**

(43) Date of publication of application:
**22.10.86 Bulletin 86/43**

(45) Publication of the grant of the patent:
**16.08.90 Bulletin 90/33**

(84) Designated Contracting States:
**CH DE FR GB IT LI**

(56) References cited:
**GB-A- 526 193**
**US-A- 1 394 516**
**US-A- 2 253 408**
**US-A- 2 588 889**

(73) Proprietor: **Zhen, Wang Qi, No. 5 Ziqiang Street, Changchun(CN)**

(72) Inventor: **Zhen, Wang Qi, No. 5 Ziqiang Street, Changchun(CN)**

(74) Representative: **Blumbach Weser Bergen Kramer Zwirner Hoffmann Patentanwälte, Radeckestrasse 43, D-8000 München 60(DE)**

**Description**

This invention relates to a device according to the preamble of claim 1.

A device according to this kind has been disclosed by US-A 1 394 516 or GB-A 526 193. In such a device an engine and a transmission are positioned inside a wheel hub such as to reduce the axial and radial size and the weight of the hub so as to make the device suitable for lightweight vehicles, expecially for common bikes which cannot only driven by the engine but also by manpower. If the bike is driven by manpower in case the engine is not used, the load shall be as small as possible. If the engine drive system is used it shall be possible to support the engine drive mode by manpower in case the engine suffers an overload at a situation when the slope of the road is excessively big. It should also be possible to convert conveniently between the man-drive mode and the engine-drive mode or a combined drive mode wherein both modes are used simultaneously.

The device according to US-A 1 394, 516 provides only an engine-drive mode. The transmission comprises a clutch means in order to disconnect a driving shaft from another part of the transmission when starting the engine by means of a crank which can be coupled with the driving shaft.

The device according to GB-A 526 193 provides besides an engine-drive mode also a pedal-drive mode and a simultaneous operation of both drives. To disconnect the engine drive it is necessary to disengage by an actuator a clutch which is mounted in a lay-shaft of the transmission. Therefore, even if the clutch is disengaged some parts of the transmission are still connected with the hub and have to be driven by manpower. The clutch cannot be operated automatically but only by an actuator.

The device described in US-A 4 132 281 comprises an engine with its crank shaft arranged coaxially to the wheel and the longitudinal symmetrical plane of the engine body being coincide with the symmetrical plane of the wheel. The need of maintaining a certain piston stroke forces the hub to be radially oversized. Installing the reduction drive mechanism, magneto and cooling fan at the outside of the engine body makes also the whole device to be axially oversized as well as overweighted. Because the support bearing of the hub is offset from the central symmetrical plane of the wheel the load of the bearing is increased and stability of the wheel decreased. Although in this case a friction clutch of the automatic centrifugal type is provided which connects the engine with the transmission only if the engine is running and besides that a clutch which can be actuated by a handle is provided in the transmission to separate part of the gears of the transmission from the hub when riding the motor-cycle by manpower also in this case part of the gears of the transmission are always connected with the hub and therefore, have to be driven too when the engine is stopped and disengaged from the hub.

In order to solve the problems mentioned above it is an object of the invention to disengage the reduction drive system completely from the hub when the engine is stopped so as to permit an easy riding by manpower. Still further it is an object to ensure a simple, safe and convenient conversion between the man-drive mode and engine-drive mode, as well as an incorporation of the two.

The invention is characterized by the features of claim 1. Further features of the invention are described in the subclaims.

The device according to the invention comprises a first and a second clutch means to automatically connect the transmission to the engine and to the wheel hub, respectively during operation of the engine and to automatically disconnect the transmission from the engine and from the wheel hub respectively when the engine is stopped. Preferably, the first clutch means is a centrifugal frictional clutch and the second clutch means an overrunning clutch.

For starting the engine a starting mechanism for controlably transmitting a wheel hub rotation to the engine crank shaft is provided. This starting mechanism comprises also clutch means in order to attain a connection between the wheel hub and the engine crank shaft when the wheel hub is rotated by manpower in case of starting the engine. After start of the engine the starting mechanism has to be disconnected. These operations are effected preferably by a gear clutch and a further overrunning clutch.

The device for direct-driving of wheels proposed by the present invention can be adapted for various kinds of light-weight vehicles, in particular for motorbikes or motorcycles. The device comprises engine transmission units, a fixed wheel axle, a wheel hub and a set of an actuating mechanism, wherein the engine and the parts of the transmission units are all arranged inside the hub located at the center of the wheel.

The said engine mounted in the hub is a two-stroke gasoline engine, the longitudinal axis of the cylinder body therof lies in an orthogonal plane of the wheel axle, or perpendicularly intersects with the axial line of the wheel; the main journals of the crankshaft are offset from an parallel with the wheel axle. The crankshaft has one end thereof mounted with a magneto rotor and another end thereof connected with the transmission units via a clutch; the inner axial distance between said magneto rotor and rotatable members of the clutch is smaller than the diameter of the cylinder bore. The reciprocating piston in the engine cylinder has a recess on its top surface, and a pair of lugs extending from the inner side of the top section forms piston seatings for mounting the piston pin therein. The piston skirt portion has a thin-wall structure, the parts of which near the axial line of the piston pin are cut off to form openings. The vertical distance from the lowest point of the skirt to the axial line of the crankshaft is smaller than the gyro radius of said magneto and clutch means when the piston is at the bottom dead center.

In the device according to the present invention an overrunning clutch is used at the last stage of the transmission units to transmit the propulsion power, so that it is possible to rotate the wheel in both forward and backward directions easily when the engine stops. It is also possible to add the manpower to the wheel in case the engine suffers an overload at situation such as when the slope of the road is excessively big.

The start system in the device according to the present invention transmits the rotation of the hub to the engine crankshaft through the meshing of a gear clutch in the transmission units. After the engine has been started, the gear clutch turns to get inactive, and the driving force is transmitted by means of the friction of flying-weights of a centrifugal friction clutch and the overrunning clutch, with the result of avoiding the damage of the teeth of the gear clutch. The relative sliding between the flying-weights and the outer dish of the centrifugal friction clutch, and between the driving and driven members of the overrunning clutch can provide protection to the engine and transmission units in case of overload.

The impulse-proof type of the gear drive mechnism, for example the spiral tooth gear, arc tooth gear, or involute herringbone tooth gear drive mechnism, may be used in the device to raise the stability and smoothness of power transmission, wherein the rim of at least a big gear is separated from its hub portion, with an elastic ring being fitted in between, in order to reduce the impulsion and shock when the engine is being started.

A brake means composed of brake hoof blocks and the wall of said wheel hub is provided in the device for the purpose of braking the wheel quickly and reliably.

Two vertical side walls of the wheel hub are supported on the wheel axle shaft and on a boss ring axially protruding from the engine body fixed to the said shaft via bearings respectively, to assure a better load condition of the bearings and a stable and reliable support of the wheel.

The said transmission units are disposed in a sealed box located inside the said hub, and can be lubricated with liquid lubricant, one side of the sealed box is fixed to the crankcase of the engine and the other side thereof is supported on the axially extending portion of a internal gear via a bearing, with sealing rings being provided thereto.

Channels are provided in the said boss ring to allow the insertion of oil inlet pipes, various actuating means and exhaust pipes, Besides, there are provided some openings on the wall of the wheel hub of the device to facilitate ventilation and maintenance. It is also appropriate to provide the hub wall with blades for introducing cooling air.

The conversion between the manpower drive mode and the engine drive mode, the speed regulation of the engine drive mode, are integrally controlled by handles.

For a better understanding of the nature and characteristics of the present invention, we are going to describe the embodiments according to the present invention in detail by way of the following accompanying drawings in which:

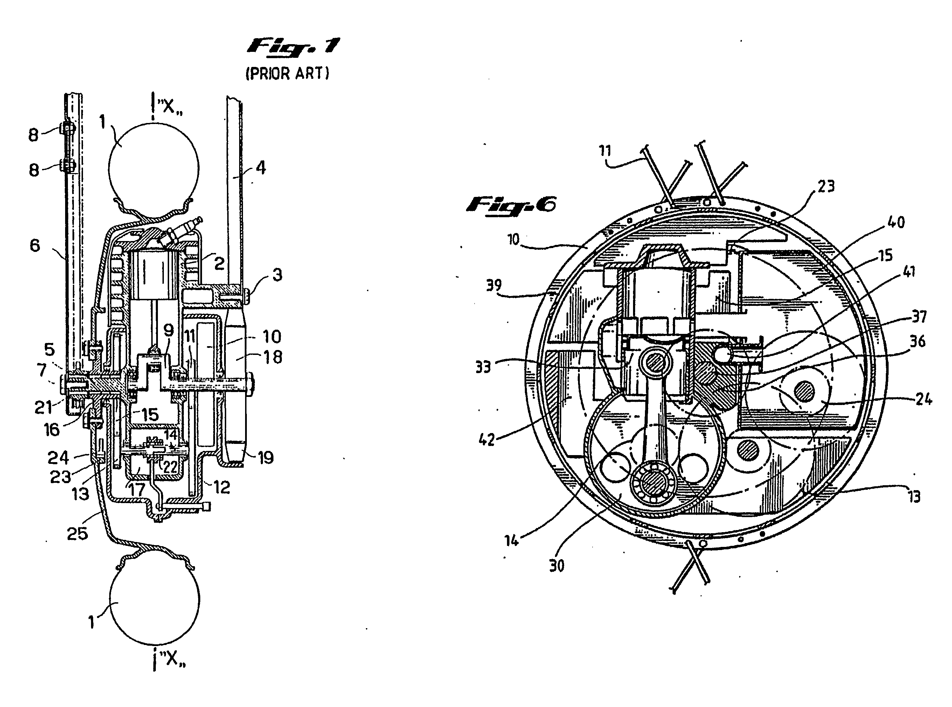

Fig. 1 is an outline view of the drive device of the prior art;

Fig. 2 is a schematic drawing of an embodiment of the present invention;

Fig. 3 is a cross section view of the overrunning clutch located on the start gear of an embodiment of the present invention;

Fig. 4 is an elevational view of the centrifugal clutch comprising a friction flying-weight and outer dish of an embodiment of the present invention;

Fig. 5 is an elevational view of the overrunning clutch located on the internal gear of an embodiment of the present invention;

Fig. 6 is a schematic view showing the arrangement of the engine and the transmission units in the wheel hub;

Fig. 7 is a diagrammatic sketch of the brake of an embodiment of the present invention.

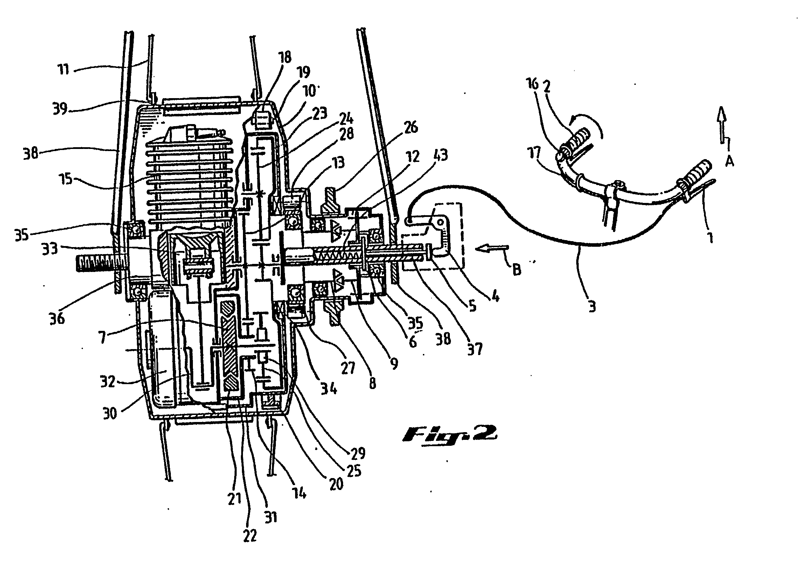

This embodiment according to the present invention (as shown in Fig. 2) is a device comprising engine and drive units, which is adapted mainly to bicycles or motor cycles. The engine in the said device is started through such a process to be described as follows:

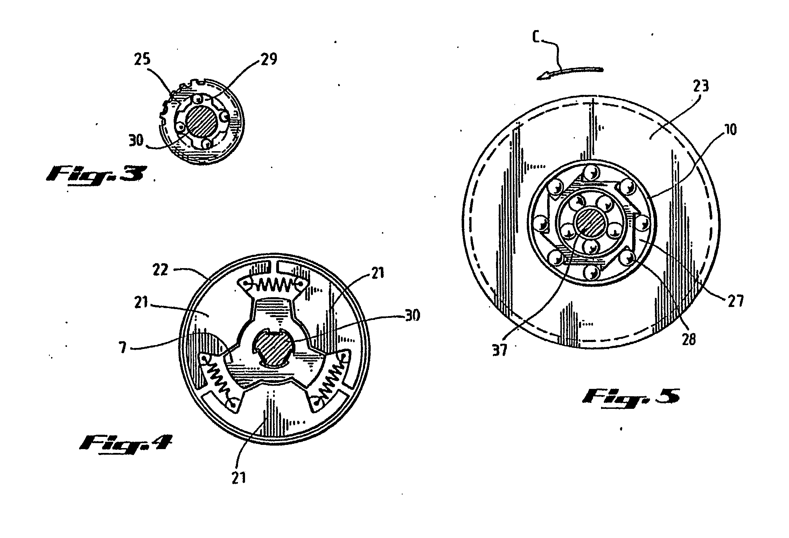

While rolling the vehicle wheel forward by manpower, lift the hand shank 1 on the handle bar of the vehicle in the direction shown by the arrow A in Fig. 2, pulling the lever 4 into motion through a wire 3 connected between the shank 1 and one end of the lever 4, the other end of the lever 4 being connected to the right end of a push rod 5, thus moving the push rod 5 in the direction shown by the arrow B in Fig. 2, so making the right part 9 of the tooth clutch to move leftward with the help of a pin 6 disposed at the radial direction of the push rod 5, thus causing the left part 8 of the gear clutch to mesh with the right part 9 thereof, said right part 9 being connected with the wheel hub via a spline 12, while the left part 8 of the gear clutch being fixed on the internal gear 23 which engages with the start gear 25 which is mounted on the crankshaft 30 of the engine 15 with an overrunning clutch 29 being disposed in between (as shown in Fig. 3), thus, the rotational movement of the wheel hub being finally transmitted to the crankshaft. Provide the engine with electricity and fuel supply in time. So the engine is started.

The propulsion power of the engine is transmitted through the drive units to the wheel by the process to be described as follows:

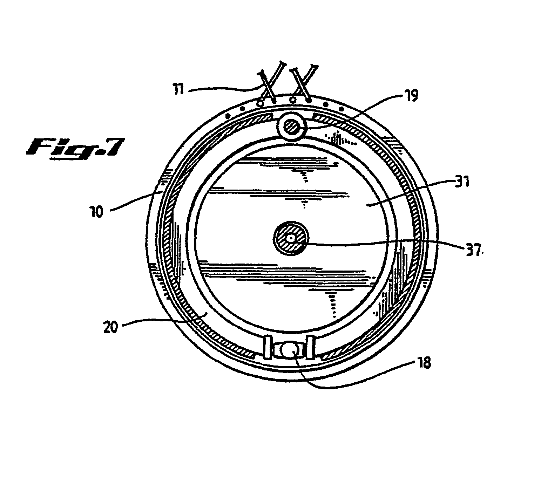

After the start of the engine 15, the crankshaft 30 brings the central portion 7 of the centrifugal friction clutch mounted thereon into fast rotation, causing the flying-weight 21 of the clutch to get into contact with the outer dish 22 (see Fig. 4), the friction therebetween causes the rotational movement of the dish 22, and consequently of the small gear 14 fixed therewith, gear 14 engages with the duplex gear 13 which transmits the rotational movement to the internal gear 23 by means of an idler 24. The disc portion of the internal gear 23 has an axially extending central sleeve, the outer wall of which is provided with a wedge ring 27 (as shown in Fig. 5). By means of rollers 28, the wedge ring 27 rotating in the direction shown by the arrow C in Fig. 5 transmits the propulsion to the hub 10. Since the engine body is firmly fixed to the frame 38 through both ends of the axle shaft 37, which prevents the drive device from being counter rotated, thus the wheel hub rotates forwardly under the propulsion. It is recommended to adopt spiral gears or herringbone gears in the above said drive units to get a stable and smooth power transmission.

It is evident from the trilateral relation of the wedge ring 27, pin roller 28 and hub 10 that the rotation of the hub 10 alone in the C direction can hardly cause the rotation of the wedge ring 27, therefore there are hardly any interferences between the engine drive mode and the manpower drive mode. And in the case that the engine suffers a temporary overload, the manpower drive may be added to the wheel by means of pedals, chain and sprockets.

Besides, when an excessive overload occurs (such as encountering sudden obstacle on the road surface, travelling up-hill along a road of an excessively big slope, etc.) the relative sliding between the flying-weight 21 and the outer dish 22 as well as between the rollers 28 and the hub 10 provide overload protection to the engine.

The method to operate a bicycle equiped with a drive device according to the present invention may be as follows:

1. Before starting the engine, rotate the vehicle wheel by any suitable ways (such as pushing, or riding the well-known pedal, chain and sprocket assembly). Switch on the electrical circuit of the engine, pull the hand shank 1 located on the left handle bar in the direction shown by the arrow A in Fig. 2, rotate the handle 2 located on the right handle bar (i.e. opening the throttle valve). As a result, the engine being started. Rotate the handle 2 further to regulate the required fuel supply, then ride the vehicle forward.

2. The stop process of the vehicle mentioned above is as follows:
First, cut off the electrical power by pressing down the button 16 to stop engine, then stop the vehicle after slipping for a certain distance; or hold the brake handle 17 (the same as on the common bikes or motorcycles) immediately after pressing down the button 16, to actuate the brake means composed of the brake cam 18, the support shaft 19 fixed in the box 31, the brake hoof blocks 20 and the wall of the wheel hub (see Fig. 7), so as to make the two brake hoof blocks 20 expand outwardly in the hub 10, causing a sudden stop.

## Claims

1. A device for direct-driving of wheels adapted for minivehicles such as motorbikes or motor-cycles, in particular for bicycles, comprising:
a wheel axle (37) fixed to a vehicle frame (38);
a wheel hub (10) rotating about the said wheel axle (37);
an engine (15), positioned inside said wheel hub (10) and fixed on said wheel axle (37), the main journal axis of a crankshaft (30) of said engine (15) being offset from, and parallel to, said wheel axle (37);
a transmission (14, 13, 24, 23), disposed between said engine (15) and the wheel hub (10), providing at least two stages of power reduction;
and clutch means which connect said engine (15) to said wheel hub (10) or disconnect said engine from said wheel hub; characterized by
a first clutch means (7/21/22) to automatically connect said transmission (14, 13, 24, 23) to said engine (15) during operation of said engine and to automatically disconnect said transmission from said engine when said engine is stopped, and
a second clutch means (27/28/10) to automatically connect said transmission (14, 13, 24, 23) to said wheel hub (10) during operation of said engine (15) and to automatically disconnect said transmission from said wheel hub (10) when said engine is stopped.

2. A device according to claim 1, wherein said power reduction in said transmission is composed of gears (14, 13, 24, 23).

3. A device according to claim 1 or 2, wherein said first clutch means comprises a centrifugal frictional clutch (7, 21/22) mounted on said engine crankshaft (37), a driven part (22) of said clutch being fixed with a first stage gear (14) of said power reduction.

4. A device according to any of claims 1 to 3, wherein said second clutch means comprises a first overrunning clutch (27/28/10), a driving part (27) thereof being attached to the last stage (gear 23) of said power reduction, a driven part of said overrunning clutch being fixed or integrally formed with the inner wall of said wheel hub (10).

5. A device according to any of claims 1 to 4, wherein an engine starting mechanism (29, 25, 23, 8, 9, 6, 5, 4, 3, 1) is disposed substantially inside said wheel hub, and attached to one stage of said power reduction in said transmission for controllably transmitting the wheel hub rotation to the engine crankshaft (30).

6. A device according to claim 5, wherein said engine starting mechanism comprises:
a starting gear (25), positioned on said crankshaft, and engaging with a gear (23) in said last stage power reduction of said transmission;
a third clutch means (29, 8/9) connecting said starting mechanism and power reduction gear (23) to the engine crankshaft, and to the wheel hub (10) respectively; and
a clutch actuating mechanism (6/5/4/3/1) to control the connection of said third clutch means.

7. A device according to claim 6, wherein said third clutch means comprises:
a gear clutch (8, 9) a first half (9) thereof being attached to said wheel hub (10) via a spline (12), said first half of said gear clutch being movable, under the control of said clutch actuating mechanism (5/4/3/1) to mesh with a second half (8) thereof, said second half of said gear clutch being fixed to said last power reduction gear (23); and a second an overrunning clutch (29), disposed between said starting gear and said engine crankshaft (30), a driving part of said second overrunning clutch being positioned on the inner periphery of said starting gear (25), a driven part of said clutch being formed by the cylindrical surface of said engine crankshaft (30).

8. A device according to claim 7, wherein said clutch actuating mechanism comprises:
a traverse pin (6) and a push rod (5), movably disposed in hole provided in said wheel axle (37); a lever (4) connected to an outer end of said push rod (5); and a wire (3) linking said lever to a manually operable handle (1).

9. A device according to any of claims 3 to 8, wherein a magneto (32) and said centrifugal friction clutch (7/21/22) are respectively mounted at two ends of said engine crankshaft (30) the distance between opposing gyro planes of said magneto and said centrifugal friction clutch being smaller than the diameter of the cylinder bore of the engine (15).

10. A device according to any of claims 1 to 9, wherein said engine (15) is a two-stroke gasoline engine, a top surface of a piston (33) of said engine being formed with a spherical recess, a pair of lugs being provided at the inner side of said piston top to accommodate a piston pin; said piston having a thin wall, parts of which have openings near the axis of said piston pin and near the side walls of the engine crankcase.

11. A device according to any of claims 1 to 10 wherein said wheel hub (10) has two side walls support bearings (35) on said wheel axle (37); said wheel axle being fixed to the vehicle frame (38); a boss ring (36) being provided on said wheel axle which protrudes from the engine body; said boss ring having inner passageways for introducing pipes and actuating means.

12. A device according to any of claims 1 to 11, wherein said transmission is substantially enclosed by a gear box (31) rigidly connected to the crankcase of the engine.

13. A device according to any of claims 1 to 12, being further provided with brake means comprising:
a brake cam (18);
a pivot shaft (19) attached on said gear box (31);
a pair of brake shoes (20) supported by said pivot shaft (19); and
a brake drum formed by the inner peripheral wall of said wheel hub (10).

14. A device according to any of claims 2 to 13, wherein said power reduction gears in said transmission are spiral tooth or herringbone tooth gears.

**Patentansprüche**

1. Vorrichtung für einen Direktantrieb von Rädern für Kleinfahrzeuge wie Mopeds oder Motorräder, insbesondere für Fahrräder, enthaltend:
eine an einem Fahrzeugrahmen (38) befestigte Radachse (37);
eine um die Radachse (37) rotierende Radnabe (10);
einen innerhalb der Radnabe (10) positionierten und an der Radachse (37) befestigten Motor (15), von dessen Kurbelwelle (30) die Hauptlagerachse gegenüber der Radachse (37) versetzt und parallel dazu angeordnet ist;
ein zwischen dem Motor (15) und der Radnabe (10) angeordnetes Getriebe (14, 13, 24, 23), das wenigstens zwei Stufen einer Untersetzung aufweist;
eine Kupplung, die den Motor (15) mit der Radnabe (10) verbindet oder die Verbindung des Motors von der Radnabe löst; gekennzeichnet durch
eine erste Kupplung (7/21/22), um das Getriebe (14, 13, 24, 23) automatisch mit dem Motor (15) zu verbinden solange der Motor im Betriebszustand ist und um beim Stoppen des Motors die Verbindung zwischen Getriebe und Motor automatisch zu lösen;
und eine zweite Kupplung (27/28/10) um das Getriebe (14, 13, 24, 23) automatisch mit der Radnabe (10) zu verbinden, solange der Motor (15) im Betriebszustand ist und um die Verbindung zwischen dem Getriebe und der Radnabe (10) automatisch zu lösen, wenn der Motor angehalten wird.

2. Vorrichtung nach Anspruch 1, dadurch gekennzeichnet, daß für die Untersetzung in dem Getriebe Zahnräder (14, 13, 24, 23) vorgesehen sind.

3. Vorrichtung nach Anspruch 1 oder 2, dadurch gekennzeichnet, daß die erste Kupplung als auf der Motorkurbelwelle (37) befestigte Zentrifugalreibungskupplung (7, 21/22) ausgebildet ist, von der ein angetriebener Teil (22) mit einem Zahnrad (14) der ersten Stufe des Untersetzungsgetriebes fest verbunden ist.

4. Vorrichtung nach einem der Ansprüche 1 bis 3, dadurch gekennzeichnet, daß die zweite Kupplung eine erste Überholkupplung (27/28/10) enthält, von der ein antreibender Teil (27) an der letzten Stufe (Zahnrad 23) des Untersetzungsgetriebes und ein angetriebener Teil an der Innenwand der Radnabe (10) angebracht oder mit dieser einstückig ausgebildet ist.

5. Vorrichtung nach einem der Ansprüche 1 bis 4, dadurch gekennzeichnet, daß ein Motor-Startmechanismus (29, 25, 23, 8, 9, 6, 5, 4, 3, 1) im wesentlichen innerhalb der Radnabe angeordnet und mit einer Stufe des Untersetzungsgetriebes verbunden ist zum steuerbaren Übertragen der Drehung der Radnabe auf die Motorkurbelwelle (30).

6. Vorrichtung nach Anspruch 5, dadurch gekennzeichnet, daß der Motor-Startmechanismus die folgenden Bauteile enthält:
ein Startzahnrad (25), das auf der Kurbelwelle positioniert ist und in ein Zahnrad (23) der letzten Stufe des Untersetzungsgetriebes eingreift;
eine dritte Kupplung (29, 8/9), die den Startmechanismus und das Zahnrad (23) des Untersetzungsgetriebes mit der Motorkurbelwelle bzw. mit der Radnabe (10) verbindet; und
einen Kupplungsbetätigungsmechanismus (6/5/4/3/1), um die Verbindung der dritten Kupplung zu steuern.

7. Vorrichtung nach Anspruch 6, dadurch gekennzeichnet, daß die dritte Kupplung die folgenden Bauteile enthält:
eine Zahnradkupplung (8, 9), von der eine erste Hälfte (9) über einen Keil (12) an der Radnabe (10) angebracht ist, diese erste Hälfte der Zahnradkupplung unter der Steuerung des Kupplungsbetätigungsmechanismus (5/4/3/1) bewegbar ist, um mit ihrer zweiten Hälfte (8) in Eingriff zu kommen, die zweite Hälfte der Zahnradkupplung am letzten Zahnrad (23) des Untersetzungsgetriebes befestigt ist; und
eine zweite Überholkupplung (29) zwischen dem Startzahnrad und der Motorkurbelwelle (30) angeordnet ist, ein treibender Teil der zweiten Überholkupplung am inneren Umfang des Startzahnrades (25) positioniert ist und ein angetriebener Teil der Kupplung durch die zylindrische Oberfläche der Motorkurbelwelle (30) gebildet wird.

8. Vorrichtung nach Anspruch 7, dadurch gekennzeichnet, daß der Kupplungsbetätigungsmechanismus folgende Bauteile enthält: einen Querstift (6) und eine Schubstange (5), die beweglich in Löchern der Radachse (37) angeordnet ist; einen Hebel (4), der mit einem äußeren Ende der Schubstange (5) in Verbindung steht; und einen Draht (3), der den Hebel mit einem manuell betätigbaren Griff (1) verbindet.

9. Vorrichtung nach einem der Ansprüche 3 bis 8, dadurch gekennzeichnet, daß ein Magnetinduktor (32) und die zentrifugale Reibungskupplung (7/21/22) jeweils an zwei Enden der Motorkurbelwelle (30) befestigt sind, wobei der Abstand zwischen den gegenüberliegenden Rotationsebenen des Magnetinduktors und der zentrifugalen Reibungskupplung kleiner als der Durchmesser der Zylinderbohrung des Motors (15) ist.

10. Vorrichtung nach einem der Ansprüche 1 bis 9, dadurch gekennzeichnet, daß der Motor (15) ein Zweitaktbenzinmotor ist, von dem eine Oberfläche des Kolbens (33) mit einer räumlichen Aussparung versehen ist, ein paar Augen an der Innenseite des Kolbenbodens vorgesehen sind, um einen Kolbenbolzen aufzunehmen und der Kolben eine dünne Wand aufweist mit Öffnungen in der Nähe der Achse des Kolbenbolzens und in der Nähe der Seitenwände des Motorkurbelgehäuses besitzt.

11. Vorrichtung nach einem der Ansprüche 1 bis 10, dadurch gekennzeichnet, daß die Radnabe (10) zwei durch Lager (35) auf der Radachse (37) getragene seitliche Wände aufweist; die Radachse am Fahrzeugrahmen (38) befestigt ist; außerdem auf der Radachse ein Nabenring (36) vorgesehen ist, der aus dem Motorkörper vorsteht, wobei dieser Nabenring innere Kanäle zum Einführen von Rohren und Betätigungseinrichtungen enthält.

12. Vorrichtung nach einem der Ansprüche 1 bis 11, dadurch gekennzeichnet, daß das Getriebe im wesentlichen im einem geschlossenen Getriebekasten (31) untergebracht ist, der fest mit dem Kurbelgehäuse des Motors in Verbindung steht.

13. Vorrichtung nach einem der Ansprüche 1 bis 12, dadurch gekennzeichnet, daß eine Bremseinrichtung vorgesehen ist, die die folgenden Bauteile enthält: einen Bremsnocken (18), eine Drehwelle (19), die am Getriebekasten (31) angebracht ist; ein paar Bremsschuhe (20), die von der Drehwelle (19) getragen werden; und eine Bremstrommel, die in der inneren Umfangswand der Radnabe (10) ausgebildet ist.

14. Vorrichtung nach einem der Ansprüche 2 bis 13, dadurch gekennzeichnet, daß die Zahnräder im Untersetzungsgetriebe als Spiralräder oder doppelschrägenverzahnte Stirnräder ausgebildet sind.

**Revendications**

1. Un dispositif pour la propulsion directe de roues, adapté à des véhicules légers comme des cyclomoteurs ou des vélomoteurs, et adapté en particulier à des bicyclettes, comprenant:
un essieu de roue (37) fixé à un châssis du véhicule (38);
un moyeu de roue (10) qui tourne autour de l'essieu de roue (37);
un moteur (15) placé à l'intérieur du moyeu de roue (10) et fixé sur l'essieu de roue (37), l'axe de support principal d'un vilebrequin (30) du moteur (15) étant décalé par rapport à l'essieu de roue (37), et parallèle à ce dernier;
une transmission (14, 13, 24, 23), placée entre le moteur (15) et le moyeu de roue (10), procurant au moins deux étages de réduction de vitesse;
et des moyens d'embrayage qui accouplent le moteur (15) au moyeu de roue (10), ou qui désaccouplent le moteur par rapport au moyeu de roue; caractérisé par
des premiers moyens d'embrayage (7/21/22) destinés à accoupler automatiquement la transmission (14, 13, 24, 23) au moteur (15) pendant le fonctionnement du moteur, et à désaccoupler automatiquement la transmission par rapport au moteur lorsque ce dernier est arrêté, et
des seconds moyens d'embrayage (27/28/10) destinés à accoupler automatiquement la transmission (14, 13, 24, 23) au moyeu de roue (10) pendant le fonctionnement du moteur (15) et à désaccoupler automatiquement la transmission vis-à-vis du moyeu de roue (10) lorsque le moteur est arrêté.

2. Un dispositif selon la revendication 1, dans lequel les moyens de réduction de vitesse dans la transmission sont constitués par des roues dentées (14, 13, 24, 23).

3. Un dispositif selon la revendication 1 ou 2, dans lequel les premiers moyens d'embrage consistent en un embrayage centrifuge à friction (7, 21/22) monté sur le vilebrequin du moteur (37), et une partie entraînée (22) de cet embrayage est fixée à une roue dentée de premier étage (14) des moyens de réduction de vitesse.

4. Un dispositif selon l'une quelconque des revendications 1 à 3, dans lequel les seconds moyens d'embrayage comprennent un premier embrayage à roue libre (27/28/10), et une partie d'entraînement (27) de cet embrayage est fixée sur le dernier étage (roue dentée 23) des moyens de réduction de vitesse, tandis qu'une partie entraînée de l'embrayage à roue libre est fixée sur la paroi intérieure du moyeu de roue (10), ou bien elle est formée d'un seul tenant avec cette paroi.

5. Un dispositif selon l'une quelconque des revendications 1 à 4, dans lequel un mécanisme de démarrage de moteur (29, 25, 23, 8, 9, 6, 5, 4, 3, 1) est disposé pratiquement à l'intérieur du moyeu de roue, et est fixé sur un étage des moyens de réduction de vitesse dans la 'transmission, pour transmettre sélectivement la rotation du moyeu de roue au vilebrequin du moteur (30).

6. Un dispositif selon la revendication 5, dans lequel le mécanisme de démarrage de moteur comprend:
une roue dentée de démarrage (25), placée sur le vilebrequin, et qui engrène avec une roue dentée (23) se trouvant dans le dernier étage des moyens de réduction de vitesse de la transmission;

des troisièmes moyens d'embrayage (29, 8/9) qui accouplent le mécanisme de démarrage et la roue dentée de réduction de vitesse (23) respectivement au vilebrequin du moteur et au moyeu de roue (10); et un mécanisme d'actionnement d'embrayage (6/5/4/3/1) pour commander la condition d'embrayage des troisièmes moyens d'embrayage.

7. Un dispositif selon la revendication 6, dans lequel les troisièmes moyens d'embrayage comprennent:
un embrayage à dents (8, 9) dont une première moitié (9) est fixée au moyeu de roue (10) par l'intermédiaire d'une cannelure (12), la première moitié de cet embrayage à dents pouvant être déplacée, sous la commande des moyens d'actionnement d'embrayage (5/4/3/1), de façon à s'accoupler à une seconde moitié (8) de l'embrayage, la seconde moitié de l'embrayage à dents étant fixée à la dernière roue dentée des moyens de réduction de vitesse (23); et un second embrayage à roue libre (29), qui est placé entre la roue dentée de démarrage et le vilebrequin du moteur (30), une partie d'entraînement du second embrayage à roue libre étant placée sur la périphérie intérieure de la roue dentée de démarrage (25), tandis qu'une partie entraînée de cet embrayage est formée par la surface cylindrique du vilebrequin du moteur (30).

8. Un dispositif selon la revendication 7, dans lequel le mécanisme d'actionnement d'embrayage comprend:
une tige transversale (6) et un poussoir (5), disposés de façon mobile dans des trous qui sont formés dans l'essieu de roue (37); un levier (4) qui est accouplé à une extrémité extérieure du poussoir (5); et un câble (3) qui relie le levier à une poignée (1) qu'on peut actionner manuellement.

9. Un dispositif selon l'une quelconque des revendications 3 à 8, dans lequel une magnéto (32) et un embrayage centrifuge à friction (7/21/22) sont respectivement montés à deux extrémités du vilebrequin du moteur (30), et la distance entre des plans de rotation en regard de la magnéto et de l'embrayage centrifuge à friction est inférieure à l'alésage du cylindre du moteur (15).

10. Un dispositif selon l'une quelconque des revendications 1 à 9, dans lequel le moteur (15) est un moteur à essence à deux temps, une surface supérieure d'un piston (33) du moteur présente une cavité sphérique, une paire de pattes sont formées du côté intérieur de la surface supérieure du piston, pour recevoir un axe de piston; et le piston a une paroi mince dont des parties présentent des ouvertures près de l'axe de piston et près des parois latérales du carter inférieur du moteur.

11. Un dispositif selon l'une quelconque des revendications 1 à 10, dans lequel le moyeu de roue (10) comporte deux parois latérales supportant des paliers (35) sur l'essieu de roue (37); l'essieu de roue est fixé sur le châssis du véhicule (38); un bossage annulaire (36) est formé sur l'essieu de roue et fait saillie à partir du bloc moteur; et ce bossage annulaire comporte des passages intérieurs pour l'introduction de tuyaux et de moyens d'actionnement.

12. Un dispositif selon l'une quelconque des revendications 1 à 11, dans lequel la transmission est pratiquement enfermée dans une boîte d'engrenages (31) qui est acouplée de façon rigide au carter inférieur du moteur.

13. Un dispositif selon l'une quelconque des revendications 1 à 12, qui est en outre équipé de moyens de freinage comprenant:
une came de frein (18);
un pivot (19) fixé à la boîte d'engrenages (31);
une paire de sabots de frein (20) qui sont supportés par le pivot (19); et
un trambour de frein qui est formé par la paroi périphérique intérieure du moyeu de roue (10).

14. Un dispositif selon l'une quelconque des revendications 2 à 13, dans lequel les roues dentées de réduction de vitesse dans la transmission sont des roues comportant des dentures hélicoïdales ou des dentures en chevrons.

_Fig.1_
(PRIOR ART)

_Fig.6_

EP 0 198 297 B1

Fig. 2

EP 0 198 297 B1

Fig. 3

Fig. 4

Fig. 5

EP 0 198 297 B1

Fig.7